# EUROPEAN PATENT APPLICATION

(11) **EP 4 588 726 A1**
(43) Date of publication of application: **23.07.2025**
(21) Application number: 23933879.1
(22) Date of filing: 13.12.2023
(51) Int. Cl.: B60R 25/20, B60R 25/24

(54) **VEHICLE CONTROL METHOD AND APPARATUS, VEHICLE, AND STORAGE MEDIUM**

(30) Priority: 19.04.2023 CN 202310436558
(71) Applicant: Chery Automobile Co., Ltd., Wuhu, Anhui 241006 (CN)
(72) Inventor: LI, Shan, Wuhu, Anhui 241006 (CN); FENG, Liwei, Wuhu, Anhui 241006 (CN); MENG, Rui, Wuhu, Anhui 241006 (CN); HAO, Wei, Wuhu, Anhui 241006 (CN)
(74) Representative: Yang, Shu
(86) International application number: PCT/CN2023/138340
(87) International publication number: WO 2024/217015

(57) **Abstract**

The present application relates to a vehicle control method and apparatus, a vehicle, and a storage medium, wherein the method comprises: using a plurality of UWB receivers to receive positioning signals transmitted by a mobile terminal, thereby achieving signal stable transmission and high-precision positioning, and thus determining the distance between the mobile terminal and a vehicle on the basis of the received positioning signals; when the distance is within a welcome control interval, controlling the vehicle to execute an illumination action, a pre-startup action, and/or a pre-startup alert action, thereby implementing the vehicle welcome feature and pre-starting, thus helping a user find the vehicle and reducing vehicle start-up time; and when the distance is within an unlocking control interval, controlling the vehicle to be unlocked, and according to the distance, opening the vehicle door, thereby achieving a contact-free entry into the vehicle by the user. The method increases convenience and speed, intelligence, and the level of automation, and improves user experience.

## Description

This application is based on and claims priority to Chinese Patent Application No. 202310436558.3, filed on April 19, 2023, and entitled " VEHICLE CONTROL METHOD AND DEVICE, VEHICLE AND STORAGE MEDIUM," the disclosure of which is herein incorporated by reference in its entirety.

### TECHNICAL FIELD

The present disclosure relates to the field of vehicle intelligent control technologies, and in particular, relates to a method and apparatus for controlling a vehicle, a vehicle, and a storage medium.

### BACKGROUND

Currently, to unlock a vehicle to enter the vehicle, a user can unlock or lock the vehicle by operating an intelligent key, or it is determined whether the intelligent key is within an unlock range, and the user directly unlock or lock the vehicle by touching an unlock region at an inner side of a door handle.

In the related art, a user needs to manually unlock or lock a vehicle. In the case that the user's hands are occupied, such as carrying an object or holding an object, the user needs to put down the object in hand to unlock or lock the vehicle.

### SUMMARY

The present disclosure provides a method and apparatus for controlling a vehicle, a vehicle, and a storage medium, which improves the automation and intelligence level of the vehicle.

According to a first aspect of embodiments of the present disclosure, a method for controlling a vehicle is provided. The vehicle is provided with a plurality of ultra wide band (UWB) receivers, and the method includes: determining a distance between a mobile terminal and the vehicle based on positioning signals received by the plurality of UWB receivers from the mobile terminal; controlling the vehicle to perform at least one of: a lighting action, a pre-start action, or a pre-start reminding action, in a case that the distance is in a welcome control range; and controlling the vehicle to be unlocked and controlling the vehicle to open a door based on the distance, in a case that the distance is in an unlock control range.

In other words, at least one UWB receiver is used to receive a current positioning signal from a mobile terminal; an actual distance between the mobile terminal and the vehicle is determined by parsing the current positioning signal, and a control range in which the actual distance falls is determined; and in the case that the control range is within a welcome control range, the vehicle is controlled to perform a lighting action, a pre-start action, and/or a pre-start reminding action, and in the case that the control range enters an unlock control range from the welcome control range, the vehicle is unlocked and at the same time a door of the vehicle is opened based on the actual distance.

In some embodiments of the present disclosure, opening the door of the vehicle based on the actual distance includes: acquiring posture information of a target user, in a case that the distance is in an anti-collision control range, the target user being at least one of: a user carrying the mobile terminal or a user at a target orientation of the door; determining an open action of the door based on the posture information and controlling the vehicle to open the door according to the open action. In other words, in the case that the control range is within the anti-collision control range, perception data of a user is acquired; the actual posture of the user is determined based on the perception data; and an optimal open action for the door of the vehicle is matched based on the actual posture, and the door of the vehicle is opened according to the optimal open action.

In some embodiments of the present disclosure, the method further includes: controlling the vehicle to be locked and controlling the vehicle to perform a lock-result reminding action, in a case that the vehicle meets a predetermined lock condition and the distance is in a lock control range. In other words, it is determined whether the vehicle meets the predetermined lock condition; in the case that the vehicle meets the predetermined lock condition, it is determined whether the actual distance falls in a lock control range; and in the case that the actual distance falls in the lock control range, the vehicle is locked and at the same time the vehicle is controlled to perform a lock-result reminding action.

In some embodiments of the present disclosure, controlling the vehicle to perform the lock-result reminding action includes: controlling at least one device of the vehicle to perform a success-locking reminding action and controlling the vehicle to send a success-locking message to the mobile terminal, in a case that the vehicle is successfully locked, wherein the at least one device includes at least one of an optical display device and an acoustic reminding device; and controlling the at least one device of the vehicle to perform an unsuccess-locking reminding action and controlling the vehicle to send an unsuccess-locking reminding message to the mobile terminal, in a case that the vehicle is unsuccessfully locked. In other words, in the case that the vehicle is successfully locked, at least one optical display device and/or at least one acoustic reminding device of the vehicle is controlled to perform success-locking reminding, and at the same time a success-locking message is sent to the mobile terminal; and in the case that the vehicle is unsuccessfully locked, at least one optical display device and/or at least one acoustic reminding device of the vehicle is controlled to perform unsuccess-locking reminding, and at the same time an unsuccess-locking reminding message is sent to the mobile terminal, such that the mobile terminal is controlled to remind the user that the vehicle is unsuccessfully locked.

In some embodiments of the present disclosure, the method further includes: determining a time of duration of received positioning signals, in the case that the vehicle meets the lock condition; acquiring an in-vehicle image of the vehicle, in a case that the time of duration exceeds a predetermined duration; and controlling the vehicle to be locked and sending an abnormal reminder to a target terminal, in a case that the in-vehicle image shows that no passengers remain in the vehicle, wherein the target terminal is a terminal other than the mobile terminal. In other words, a stay duration for which the current positioning signal is outside the lock control range is recorded; in the case that the stay duration exceeds a predetermined duration, an in-vehicle image of the vehicle is acquired to determine whether there is a remaining passenger in the vehicle based on the in-vehicle image; and in the case that there is no remaining passenger in the vehicle, the vehicle is locked and at the same time an abnormal reminder is sent to a predetermined terminal.

According to a second aspect of the embodiments of the present disclosure, an apparatus for controlling a vehicle is provided. The vehicle is provided with a plurality of UWB receivers, and the apparatus includes: a determining module, configured to: determine a distance between a mobile terminal and the vehicle based on positioning signals received by the plurality of UWB receivers from the mobile terminal; and a first controlling module, configured to: control the vehicle to perform at least one of: a lighting action, a pre-start action, or a pre-start reminding action, in a case that the distance is in a welcome control range; and control the vehicle to be unlocked and control the vehicle to open a door based on the distance, in a case that the distance is in an unlock control range. The determining module includes: a receiving module, configured to: receive current positioning signals by the plurality of UWB receivers from the mobile terminal; and a parsing module, configured to: determine an actual distance between the mobile terminal and the vehicle by parsing the current positioning signals, and determine a control range in which the actual distance falls. Further, the above first controlling module is also understood as to: control the vehicle to perform a lighting action, a pre-start action, and/or a pre-start reminding action, in the case that the control range is within a welcome control range; and unlock the vehicle and at the same time open a door of the vehicle based on the actual distance, in the case that the control range enters an unlock control range from the welcome control range.

In some embodiments of the present disclosure, the first controlling module includes: an acquiring unit, configured to: acquire posture information of a target user, in a case that the distance is in an anti-collision control range, the target user being at least one of: a user carrying the mobile terminal or a user at a target orientation of the door; and a controlling unit, configured to: determine an open action of the door base on the posture information and control the vehicle to open the door according to the open action. Alternatively, the first controlling module includes: a perceiving unit, configured to: acquire perception data of a user, in the case that the control range is in an anti-collision control range; a determining unit, configured to: determine an actual posture of the user based on the perception data; and a controlling unit, configured to: match an optimal open action for the door of the vehicle based on the actual posture, and open the door of the vehicle according to the optimal open action.

In some embodiments of the present disclosure, the apparatus further includes: a second controlling module, configured to: control the vehicle to be locked and control the vehicle to perform a lock-result reminding action, in a case that the vehicle meets a predetermined lock condition and the distance is in a lock control range. Alternatively, the apparatus further includes: a judging module, configured to: judge whether the vehicle meets a predetermined lock condition; and the above second controlling module is also understood to: determine whether the actual distance falls in the lock control range, in the case that the vehicle meets the predetermined lock condition; and lock the vehicle and at the same time control the vehicle to perform the lock-result reminding action, in the case that the actual distance falls in the lock control range.

In some embodiments of the present disclosure, the second controlling module includes: a first reminding unit, configured to: control at least one device of the vehicle to perform a success-locking reminding action and control the vehicle to send a success-locking message to the mobile terminal, in a case that the vehicle is successfully locked, the at least one device including at least one of an optical display device and an acoustic reminding device, or control at least one optical display device and/or at least one acoustic reminding device of the vehicle to perform a success-locking remining action and at the same time send a success-locking message to the mobile terminal, in the case that the vehicle is successfully locked; and a second reminding unit, configured to: control the at least one device of the vehicle to perform an unsuccess-locking reminding action and control the vehicle to send an unsuccess-locking reminding message to the mobile terminal, in a case that the vehicle is unsuccessfully locked, or control the at least one optical device and/or at least one acoustic reminding device of the vehicle to perform an unsuccess-locking reminding action and at the same time send an unsuccess-locking reminding message to the mobile terminal to control the mobile terminal to perform unsuccess-locking reminding, in the case that the vehicle is unsuccessfully locked.

In some embodiments of the present disclosure, the apparatus is further configured to: determine a time of duration of received positioning signals, in the case that the vehicle meets the lock condition; acquire an in-vehicle image of the vehicle, in a case that the time of duration exceeds a predetermined duration; and control the vehicle to be locked and send an abnormal reminder to a target terminal, in a case that the in-vehicle image shows that no remaining passengers remain in the vehicle, wherein the target terminal is a terminal other than the mobile terminal. In other words, the apparatus further includes a recording module, configured to: record a stay duration for which the current positioning signal is outside the lock control range; an acquiring module, configured to: acquire an in-vehicle image of the vehicle to determine whether there is a remaining passenger in the vehicle based on the in-vehicle image, in the case that the stay duration exceeds a predetermined duration; and a reminding module, configured to: lock the vehicle and at the same time send an abnormal reminder to a predetermined terminal, in the case that there is no remaining passenger in the vehicle.

According to a third aspect of the embodiments of the present disclosure, a vehicle is provided. The vehicle includes: a memory, a processor, and a computer program stored on the memory and runnable by the processor, wherein the processor, when running the computer program, is caused to perform the method for controlling the vehicle as described in the above embodiments.

According to a fourth aspect of the embodiments of the present disclosure, a computer-readable storage medium is provided. The computer-readable storage medium stores a computer program thereon, wherein the computer program, when loaded and run by a processor, causes the processor to perform the method for controlling a vehicle as described above.

In the embodiments of the present disclosure, stable transmission of signals and high-precision positioning are achieved by using a plurality of UWB receivers to receive positioning signals from a mobile terminal, and then an actual distance of the mobile terminal is determined based on the positioning of signals. In the case that the distance is in a welcome control range, the vehicle is controlled to perform a lighting action, a pre-start action, and/or a pre-start reminding action, thereby achieving the welcome of the vehicle and the pre-start of the vehicle, helping the user to find the vehicle, and at the same time saving the start-up time. In the case that the distance is in an unlock control range (in other words, enters the unlock control range from the welcome control range), the vehicle is unlocked and a door of the vehicle is opened based on the actual distance, therefore, the user can smoothly enter the vehicle with high convenience and efficiency and at a high level of intelligence and automation, which facilitates achieving a better use experience of the user.

Additional aspects and advantages of the present disclosure are partly described hereinafter, and some parts of the present disclosure are apparent based on the following description or learned through the practice of the present disclosure.

### BRIEF DESCRIPTION OF DRAWINGS

The above-mentioned and/or additional aspects and advantages of the present disclosure will become apparent and easily understood based on the following descriptions of embodiments in conjunction with the accompanying drawings, wherein:
FIG. 1 is a flowchart of a method for controlling a vehicle according to some embodiments of the present disclosure;
FIG. 2 is a principle schematic diagram of a method for controlling a vehicle according to an embodiment of the present disclosure;
FIG. 3 is a schematic structural diagram of an apparatus for controlling a vehicle according to some embodiments of the present disclosure; and
FIG. 4 is a schematic structural diagram of a vehicle according to some embodiments of the present disclosure.

### DETAILED DESCRIPTION

Embodiments of the present disclosure are described in detail hereinafter, and examples of the embodiments are shown in the accompanying drawings, wherein the same or similar labeling throughout denotes the same or similar elements or elements having the same or similar functions. The embodiments described hereinafter with reference to the accompanying drawings are exemplary and are intended to be used to explain the present disclosure and are not to be construed as limiting the present disclosure.

A method and apparatus for controlling a vehicle, a vehicle, and a storage medium of embodiments of the present disclosure are described below with reference to the accompanying drawings. With respect to the technical problem in the related arts mentioned in the background that a user needs to manually unlock or lock a vehicle, resulting in a low level of automation and intelligence and hindering the improvement of the user experience, the present disclosure provides a method for controlling a vehicle. According to the method, stable transmission of signals and high-precision positioning are achieved by using a plurality of UWB receivers to receive positioning signals from a mobile terminal, and then a distance between the mobile terminal and the vehicle is determined based on the received positioning signals. In the case that the distance is in a welcome control range, the vehicle is controlled to perform a lighting action, a pre-start action, and/or a pre-start reminding action, thereby achieving the welcome of the vehicle and the pre-start of the vehicle, helping the user to find the vehicle, and at the same time saving the start-up time. In the case that the distance is in an unlock control range (in other words, enters the unlock control range from the welcome control range), the vehicle is unlocked and a door of the vehicle is opened based on the actual distance, therefore, the user can smoothly enter the vehicle with high convenience and efficiency and at a high level of intelligence and automation, which facilitates achieving a better use experience of the user.

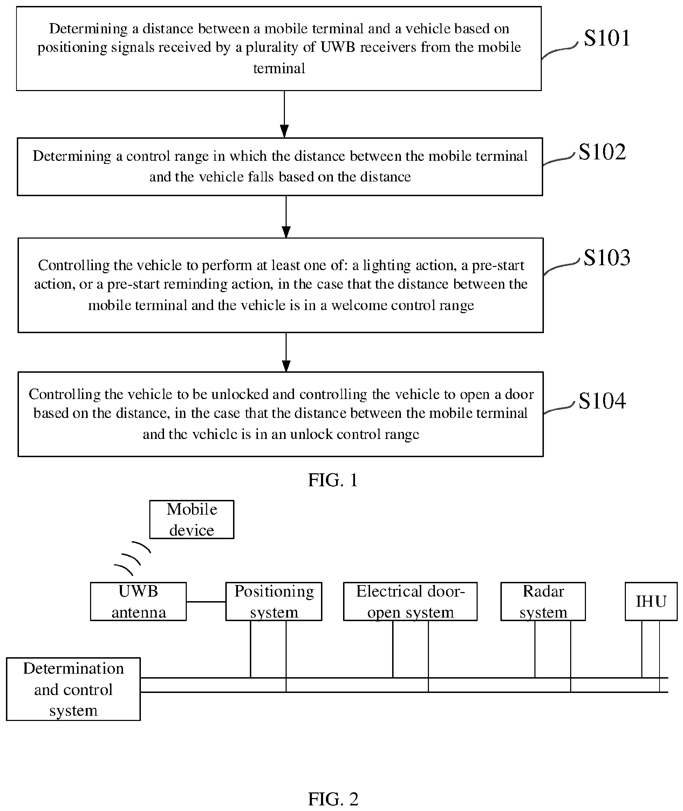

Specifically, FIG. 1 is a flowchart of a method for controlling a vehicle according to some embodiments of the present disclosure.

As shown in FIG. 1, the method for controlling a vehicle is performed by a vehicle, the vehicle is provided with a plurality of UWB receivers, and the method includes the following processes.

In process S101, a distance between a mobile terminal and the vehicle is determined based on positioning signals received by the plurality of UWB receivers from the mobile terminal.

In some embodiments of the present disclosure, the UWB receiver is, for example, a UWB antenna. The mobile terminal is, in some embodiments, a smart portable device such as a cell phone, a smartwatch, an intelligent key, a wearable device, etc., which is not limited by the present disclosure. Schematically, the mobile terminal is a terminal used by a user, and the mobile terminal is capable of sending a positioning signal to a plurality of UWB receivers on the vehicle. In some embodiments, a UWB connection is established between the mobile terminal and the vehicle, and an authentication mechanism is used to ensure the security of the communication between the two ends; and in the case that the connection between the mobile terminal and the vehicle is successfully established, the mobile terminal sends a positioning signal to the plurality of UWB receivers of the vehicle.

In some embodiments, the UWB positioning techniques include TOA (Time of Arrival) positioning technique, TDOA (Time Difference of Arrival) positioning technique, AOA (Angle-of-Arrival) positioning technique, and a mixture of the three techniques, and so on. In addition, a corresponding number of UWB receivers are disposed on the vehicle depending on different UWB positioning techniques. In some embodiments, in the case that the TOA positioning technique is used, three UWB receivers are disposed on the vehicle, which is not limited by the present disclosure.

In some embodiments, the received positioning signals are parsed based on different UWB positioning techniques selected, so as to determine the distance between the mobile terminal and the vehicle. In some embodiments, taking the TOA positioning technology as an example, the mobile terminal sends the positioning signal to three UWB receivers disposed on the vehicle, the three receivers receive the positioning signal and record timestamps receiving the positioning signal. The timestamps of the different receivers are converted to a uniform time standard using a clock synchronization technique, the difference in signal propagation time of different receivers is calculated, the position of the mobile terminal is calculated based on the difference in propagation time, and then the distance between the mobile terminal and the vehicle is determined based on the position of the mobile terminal and the position of the vehicle. It should be understood that this is only an illustration and does not constitute a limitation on the present disclosure.

Because the embodiments of the present disclosure achieve signal reception based on the UWB receiver, the influence of network communication on the signal is reduced. Even if the user is at a location with a poor signal, such as underground parking, the positioning signal is still received. At the same time, even if there are thick walls or sundries around the parking space of the vehicle, the transmission of the positioning signal is not affected, thereby achieving positioning signal parsing with high stability and high precision.

In process S102, a control range in which the distance falls is determined based on the distance between the mobile terminal and the vehicle.

In some embodiments of the present disclosure, the vehicle is provided with a plurality of control ranges, and different control ranges correspond to different execution actions. In some embodiments, the plurality of control ranges include a welcome control range, an unlock control range, a lock control range, and so on. In some embodiments, a control range in which the distance falls is determined based on the distance between the vehicle and the mobile terminal, and then, the vehicle is controlled to perform corresponding actions based on the control range in which the distance falls. In some embodiments, the welcome control range, the unlock control range, and the lock control range are adjusted accordingly by the user or a person skilled in the art depending on actual situations, which is not limited in the embodiments. In some embodiments, the welcome control range is set to be 3-5 m from the vehicle, the unlock control range is set to be 1-3 m from the vehicle, and the lock control range is set to be 5-10 m from the vehicle. It should be understood that the above is only an example and does not constitute a limitation on the present disclosure.

In addition, the vehicle continuously receives the positioning signals from the mobile terminal using the plurality of UWB receivers, and determines, based on the received positioning signals, which control range the distance between the mobile terminal and the vehicle falls in; and the vehicle is controlled to perform the corresponding action based on the control range in which the distance falls. This process is described below through process S103 and process S104.

In process S103, in a case that the distance between the mobile terminal and the vehicle is in the welcome control range, the vehicle is controlled to perform at least one of: a lighting action, a pre-start action, or a pre-start reminding action.

Alternatively, in the case that the control range in which the actual distance between the vehicle and the mobile terminal falls is the welcome control range, the vehicle is controlled to perform the lighting action, the pre-start action, and/or the pre-start reminding action. In some embodiments, taking the case in which the welcome control range is set to be 3-5 m from the vehicle as an example, in the case that the distance between the mobile terminal and the vehicle is determined as 5 m based on the positioning signal received by the UWB receiver, the distance is determined as falling in the welcome control range, and then the vehicle is controlled to perform the lighting action, the pre-start action, and/or the pre-start reminding action.

In some embodiments, the lighting action includes turning on an outline marker lamp to remind the user of the location of the vehicle, turning on a headlight of the vehicle to provide illumination for the user, etc.; the pre-start action includes warming up the vehicle in winter, turning on the air conditioner and other equipment in advance to maintain the environment of the vehicle, etc.; and the pre-start reminding action includes hooting in response to the user entering the welcome control range, so as to remind the user of the completion of the pre-start of the vehicle, such that the user can timely exit the welcome control region in the case of not wanting to start the vehicle, at which time the vehicle is recovered back to a parking state in the embodiments of the present disclosure. In addition, the hooting action also plays a role in giving a warning, so as to facilitate the animals hiding underneath the vehicle or children or pedestrians near the vehicle to timely move away from the vehicle upon hearing the hoot, so as to prevent the vehicle from colliding with animals or persons in a blind spot when the vehicle is moving out.

In process S104, in a case that the distance between the mobile terminal and the vehicle is in the unlock control range, the vehicle is controlled to be unlocked, and the vehicle is controlled to open a door based on the distance.

That is, in the embodiments of the present disclosure, a current positioning signal of the user is acquired in real-time, and a moving direction and a moving position of the user are determined. In the case that the control range in which the user is located is switched from the welcome control range to the unlock control range, the user's intention is determined as to start the vehicle, and thus the vehicle is unlocked and at the same time the door of the vehicle is opened based on the actual distance, which avoids human manual operations and thus is more convenient. In some embodiments, taking the case that the unlock control range is set to be 1-3 m from the vehicle as an example, in the case that the distance between the mobile terminal and the vehicle is 3 m, it is determined that the distance is in the unlock control range, the vehicle is controlled to be unlocked, and the door of the vehicle is controlled to be opened based on the distance.

In some embodiments of the present disclosure, opening the door of the vehicle based on the actual distance includes the following processes.

In process A, in the case that the distance between the mobile terminal and the vehicle is in an anti-collision control range, posture information of a target user is acquired, wherein the target user is at least one of: a user carrying the mobile terminal or a user at a target orientation of the door of the vehicle.

That is, an anti-collision control range is set for the vehicle. In some embodiments, the anti-collision control range is set to 0.5-1 m from the vehicle. The posture information of the target user includes information such as the body size (e.g., height, etc.) of the target user, the distance between the door and the target user, and the relative position between the target user and the door. The posture information is also understood to be a kind of perception data of the target user. In some embodiments, the vehicle is provided with sensors such as radar and camera, and the vehicle captures a picture around the vehicle using the camera, recognizes the target user from the picture, and then acquires posture information of the target user. It should be understood that the target user is a user carrying the mobile terminal in some embodiments, such as a driver of the vehicle. In some embodiments, the target user is a user located at a target orientation of a vehicle door, such as a user located directly in front of a passenger door, i.e., a passenger of the vehicle, etc. The present disclosure does not limit the type and number of target users.

In process B, an open action is determined based on the posture information, and the vehicle is controlled to open the door according to the open action.

That is, in the case that the control range in which the actual distance falls is the anti-collision control range, the perception data of the user is acquired; an actual posture of the user is determined based on the perception data; and an optimal open action of the vehicle door is matched based on the actual posture, and the vehicle is controlled to open the door according to the optimal open action.

In some embodiments, in the case that it is determined, based on the current positioning signal from the mobile terminal of the user, that the user enters the unlock control region and moves towards the vehicle, and the control range in which the user is located finally becomes the anti-collision control range, the perception data of the user is acquired by sensors, such as radar and camera, and the actual posture of the user is determined by acquiring information including the body size of the user, the distance between the user and the door of the vehicle, and the relative position between the user and the door of the vehicle. Then, the optimal open action of the door of the vehicle is matched based on the actual posture, the optimal open action including an open direction, an open angle, and so on, so as to achieve the automatic opening of the door. At the same time, the matching of the optimal open action of the door of the vehicle is performed by combining the obstacle situations around the door of the vehicle. In some embodiments, the vehicle is provided with sensors, such as radar and camera, and in the case that it is determined that the open action of door A is forward opening, and the vehicle captures the picture around the vehicle using the camera and determines, from the picture, that there is an obstacle directly in front of the door A, the door A of the vehicle is controlled to be upward opened. The above are only exemplary illustrations and do not constitute a limitation on the present disclosure.

In some embodiments, in the case that the orientation and distance between the user and the door and the height of the user meet the condition for achieving upward opening of the door of the vehicle without boundaries, the door of the vehicle is controlled to be upward opened; and in the case that the orientation and distance between the user and the door and the height of the user meet the condition for achieving lateral open of the door of the vehicle, the door of the vehicle is controlled to be laterally opened. It is understood that when controlling the door to be opened, the embodiments of the present disclosure further include determining and ensuring the space available for the opening of the door of the vehicle.

In addition, in some embodiments of the present disclosure, in the case that the current actual posture of the user hinders the opening of the door of the vehicle, the vehicle is controlled to play an unsuccess-door-open audio to remind the user to change a standing position; or the vehicle is controlled to hoot, send a failure reminder to the mobile terminal, or the like, so as to achieve the automatic open of the door of the vehicle upon the adjustment of the user.

It should be noted that the anti-collision control range is set accordingly by a person skilled in the art based on the data of the vehicle model, the open manner of the door, etc., which is not limited in the present disclosure.

The above processes S101 to S104 describe a method for controlling a vehicle provided by the present disclosure. That is, the stable transmission of signals and high-precision positioning are achieved by using a plurality of UWB receivers to receive positioning signals from a mobile terminal, and then a distance between the mobile terminal and the vehicle is determined based on the received positioning signals. In the case that the distance is in a welcome control range, the vehicle is controlled to perform a lighting action, a pre-start action, and/or a pre-start reminding action, thereby achieving the welcome of the vehicle and the pre-start of the vehicle, helping the user to find the vehicle, and at the same time saving the start-up time. In the case that the distance is in an unlock control range (in other words, enters the unlock control range from the welcome control range), the vehicle is unlocked and a door of the vehicle is opened based on the actual distance, therefore, the user can smoothly enter the vehicle with high convenience and efficiency and at a high level of intelligence and automation, which facilitates achieving a better use experience of the user.

In some embodiments of the present disclosure, the vehicle is further provided with a lock control range, and in the case that the distance between the vehicle and the mobile terminal is in the lock control range, the vehicle is controlled to be locked, thereby improving the intelligence level of the vehicle. In some embodiments, the lock control range is set to be 5-10 m from the vehicle, which is not limited in the present disclosure. The above embodiment is further described below.

Illustratively, it is determined whether the vehicle meets a predetermined lock condition; in the case that the vehicle meets the predetermined lock condition, it is determined whether the control range in which the actual distance falls is the lock control range; and in the case that the control range in which the actual distance falls is the lock control range, the vehicle is locked and at the same time the vehicle is controlled to perform a lock-result reminding acting. That is, in the case that the vehicle meets the predetermined lock condition and the distance between the mobile terminal and the vehicle is in the lock control range, the vehicle is locked and the vehicle is controlled to perform the lock-result reminding action.

In some embodiments, the vehicle is provided with a predetermined lock condition, such as the current vehicle is in a power-off state, a door of the current vehicle is not locked, and so on. In some embodiments, in the case that the vehicle meets the lock condition, it is determined, based on the current positioning signal, whether the control range in which the actual distance falls is a lock control range, and in the case that the control range in which the actual distance falls is the lock control range, the vehicle is locked to achieve the automatic close and lock of the door of the vehicle, and at the same time the vehicle is controlled to perform the lock-result reminding action to remind the user of the lock-result.

In some embodiments, the vehicle includes at least one device, which includes at least one of: an optical display device (e.g., a vehicle outline marker lamp) and an acoustic reminding device (e.g., a speaker). In some embodiments of the present disclosure, controlling the vehicle to perform the lock-result reminding action includes: in the case that the vehicle is successfully locked, controlling at least one device of the vehicle to perform a success-locking reminding action and controlling the vehicle to send a success-locking message to the mobile terminal; and in the case that the vehicle is unsuccessfully locked, controlling the at least one device of the vehicle to perform an unsuccess-locking reminding action and controlling the vehicle to send an unsuccess-locking reminding message to the mobile terminal.

In some embodiments, in the case that the vehicle is successfully locked, at least one optical display device of the vehicle, such as the outline marker lamp, is controlled to flash or emit green light so as to remind of the success-locking, and/or at least one acoustic reminding device of the vehicle is controlled, such as a horn to hoot or a speaker to play an audio of the success-locking, etc., so as to remind of the success-locking. At the same time, a success-locking message is sent to the mobile terminal, to facilitate the user checking the state of the vehicle.

In some other embodiments, in the case that the vehicle is unsuccessfully locked, at least one optical display device of the vehicle is controlled, such as the outline marker lamp to be kept on or emit red light, so as to remind of the unsuccess-locking, and/or at least one acoustic reminding device of the vehicle is controlled, such as the horn to hoot or a speaker to play an audio of unsuccess-locking, so as to remind of the unsuccess-locking. At the same time, an unsuccess-locking reminding signal is sent to the mobile terminal, so as to control the mobile terminal to perform the unsuccess-locking reminding, such as controlling the mobile terminal to continuously vibrate, be kept on, play a warning audio, etc., so as to facilitate the user acquiring the vehicle status in time, thereby ensuring the property safety of the user.

In some embodiments of the present disclosure, in the case that the vehicle meets the lock condition, it is determined whether the vehicle is parked temporarily or has an abnormality (such as the user leaves the mobile terminal in the vehicle) by combining the positioning signal received by the UWB receiver and the in-vehicle image, so as to remind the user in time, thereby ensuring the property safety of the user. In some embodiments, a camera is disposed in the vehicle and configured to shoot the space in the vehicle and acquire the in-vehicle image.

In some embodiments, in the case that the vehicle meets the lock condition, a time of duration of received positioning signals is determined; in the case that the time of duration exceeds a predetermined duration, an in-vehicle image of the vehicle is acquired; and in the case that the in-vehicle image shows that no passengers remain in the vehicle, the vehicle is controlled to be locked and an abnormal reminder is sent to a target terminal, the target terminal being a terminal other than the mobile terminal. In some embodiments, the target terminal is another mobile terminal bound to the vehicle or the terminal of an emergency contact person predefined by the user. It should be understood that the vehicle meeting the lock condition usually indicates that the driver and the passenger inside the vehicle have left the vehicle. In this case, it is possible to timely determine whether the vehicle is temporarily parked or has an abnormality by combining the positioning signal received by the UWB receiver and the in-vehicle image, and in the case that the positioning signal is constantly received by the vehicle but there is no passenger stranded inside the vehicle, it is indicated that the mobile terminal is possible to be left inside the vehicle. Based on this, the abnormal reminder is sent to the target terminal, so as to remind the user in time and protect the property safety of the user.

In other words, upon determining that the vehicle meets the predetermined lock condition, the vehicle records a stay duration for which the current positioning signal is outside the lock control range; in the case that the stay duration exceeds a predetermined duration, in-vehicle image data is acquired and it is determined whether there is a remaining passenger in the vehicle based on the in-vehicle image data; and in the case that there is no remaining passenger in the vehicle, the vehicle is locked and at the same time an abnormal reminder is sent to the predetermined terminal. It should be noted that the recording process of the above stay duration is performed only in the case of the current positioning signal being outside the lock control range or is performed also in the case of the current positioning signal being in the lock control range, which is not limited in the present disclosure.

In other embodiments, in the case that the vehicle meets the lock condition, a time of duration of received positioning signals is determined; in the case that the time of duration exceeds a predetermined duration, an in-vehicle image is acquired; and in the case that the in-vehicle image shows that a passenger remains in the vehicle, the vehicle is controlled to be kept unlocked. It should be understood that in the case that the vehicle constantly receives a positioning signal but there is a remaining passenger in the vehicle, the vehicle is likely parked temporarily, therefore the vehicle is controlled to be kept unlocked, so as to improve the intelligence level of the vehicle. In other words, upon determining that the vehicle meets the predetermined lock condition, the stay duration for which the current positioning signal is outside the lock control range is recorded; in the case that the stay duration exceeds a predetermined duration, the in-vehicle image data of the vehicle is acquired, and it is determined whether there is a remaining passenger in the vehicle based on the in-vehicle image data; and in the case that there is a remaining passenger in the vehicle, it is determined that the vehicle is parked temporarily and the lock action is not necessary for the vehicle.

In some embodiments, the aforementioned predetermined duration is set accordingly by a person skilled in the art. In some embodiments, the predetermined duration is 10 minutes, which is not limited in the present disclosure.

The working principle of the method for controlling the vehicle according to the embodiments of the present disclosure is described in detail below through an embodiment in connection with FIG. 2. FIG. 2 is a principle schematic diagram of a method for controlling a vehicle according to an embodiment of the present disclosure. As shown in FIG. 2, in the case that the UWB antenna serves as a receiver and the mobile device servers as a mobile terminal, structures involved in the application process of the embodiments of the present disclosure include: a UWB antenna, a positioning system, an electrical door-open system, a radar system, a IHU (Infotainment Head Unit), a determination and control system, and a mobile device.

In some embodiments, the positioning system is connected to the UWB antenna through a CAN (Controller Area Network) and a hardwire and is configured to send the position information of the mobile device out;
the control system is configured to determine whether the corresponding conditions of vehicle control are satisfied and send control information out;
the electrical door-open system, the control system, and the radar system are connected through the CAN, and the electrical door-open system is configured to receive unlock and open information from the control system and the anti-collision detection result information from the radar system; and
the IHU is connected to the electrical door-open system via a CAN line, and the IHU is configured to send the setup signal of whether the electrical door-open is accompanied by the unlock and open of the door and the setup signal for the electrical door-open of opening a single door/four doors and so on.

In the actual implementation process, the embodiments of the present disclosure include the following processes.

In S1, in the case that the user carries the mobile device and moves toward the vehicle, the mobile device establishes an effective connection with the positioning system. That is, a UWB connection is established between the mobile device and the vehicle.

In S2, in the case that the mobile device reaches a certain region, the positioning system initiates UWB positioning and confirms the precise position of the mobile device. That is, the positioning system utilizes a plurality of UWB receivers to receive the positioning signal from the mobile terminal and determines the distance between the mobile terminal and the vehicle.

In S3, in the case that it is detected that the mobile device enters the unlock region of the corresponding vehicle door and the unlock condition is met, the control system sends a CAN signal to request unlocking the vehicle. In some embodiments, the unlock condition includes: the power gear of the entire vehicle is off; the key has not timed out in a sensing region; the four doors are closed and the tail gate is closed; the entire vehicle is in an anti-theft state, and so on, which is not limited in the present disclosure. The mobile device enters the unlock region of the vehicle door means that the distance between the vehicle and the mobile device is determined, based on the distance, as being in the unlock control range.

In S4, the electrical door-open control system receives an unlock instruction and checks the following conditions:
1, "automatically open the door when unlocking" setting item is on;
2, "unlock single or four doors when unlocking" setting option; and
3, the radar system completes the anti-collision detection and feeds back to the electrical door-open system.

In S5, the electrical door-open system controls a single door at the region in which the key is located to be electrically opened or four doors to be electrically opened based on requirements, wherein the operation of electrically opening the door of the vehicle is performed based on a corresponding optimal open action determined based on the actual posture of the user. That is, in the case that the distance between the mobile terminal and the vehicle is in the anti-collision control range, posture information of the target user is acquired; an open action of the door of the vehicle is determined based on the posture information, and the door of the vehicle is opened according to the open action.

In S6, in the case that the mobile device leaves the vehicle and enters the lock control region, the vehicle is controlled to be locked. The mobile device enters the lock control region means that it is determined, based on the distance between the vehicle and the mobile terminal, that the distance is in the lock control region.

In S7, in the case that the mobile device stays for a long time upon the vehicle being powered off, the vehicle is controlled to be locked based on the situation in the vehicle and an abnormal reminder is sent to a predetermined terminal. That is, in the case that the vehicle meets the lock condition, a time of duration of received positioning signals is determined; in the case that the time of duration exceeds the predetermined duration, an in-vehicle image of the vehicle is acquired; and in the case that the in-vehicle image shows that no passengers remain in the vehicle, the vehicle is controlled to be locked, and an abnormal reminder is sent to the target terminal. In some embodiments, the target terminal is another mobile terminal bound to the vehicle or a terminal of an emergency contact person predefined by the user.

According to the method for controlling the vehicle according to the embodiments of the present disclosure, stable transmission of signals and high-precision positioning are achieved by using a plurality of UWB receivers to receive positioning signals from a mobile terminal, and then a distance between the mobile terminal and the vehicle is determined based on the received positioning signals. In the case that the distance is in a welcome control range, the vehicle is controlled to perform a lighting action, a pre-start action, and/or a pre-start reminding action, thereby achieving the welcome of the vehicle and the pre-start of the vehicle, helping the user to find the vehicle, and at the same time saving the start-up time. In the case that the distance is in an unlock control range (in other words, enters the unlock control range from the welcome control range), the vehicle is unlocked and a door of the vehicle is opened based on the distance, therefore, the user can smoothly enter the vehicle with high convenience and efficiency and at a high level of intelligence and automation, which facilitates achieving a better use experience of the user. Therefore, the technical problem in the related art is solved that the unlock and lock of the vehicle require human operation of the user which results in a lower level of automation and intelligence and affects the improvement of the user's experience.

Subsequently, an apparatus for controlling a vehicle according to embodiments of the present disclosure is described with reference to the accompanying drawings.

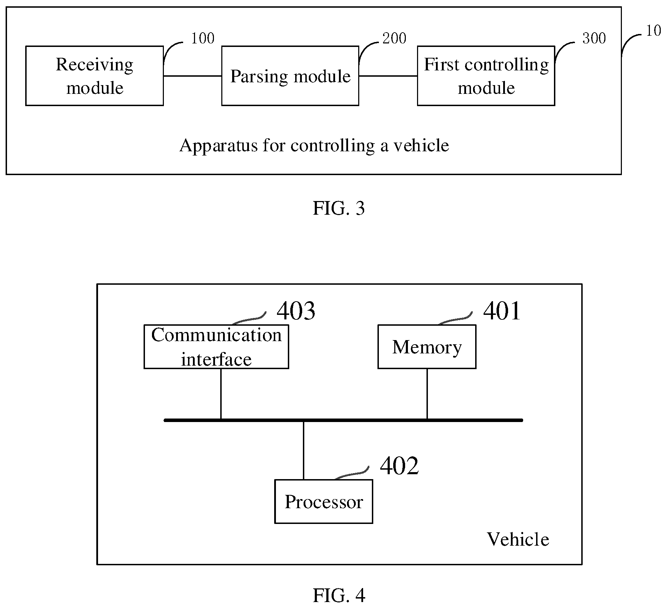

FIG. 3 is a block diagram of an apparatus for controlling a vehicle according to embodiments of the present disclosure.

As shown in FIG. 3, in the apparatus for controlling a vehicle 10, the vehicle is provided with at least one UWB receiver, and the apparatus 10 includes: a receiving module 100, a parsing module 200, and a first controlling module 300.

Specifically, the receiving module 100 is configured to: receive a current positioning signal using the at least one UWB receiver. The parsing module 200 is configured to: parse the current positioning signal, determine an actual distance between the mobile terminal and the vehicle, and determine a control range in which the actual distance falls. Alternatively, the functions of the above-described receiving module 100 and parsing module 200 are achieved by a determining module. In some embodiments, the determining module is configured to: determine the distance between the mobile terminal and the vehicle based on the positioning signals received by a plurality of UWB receivers from the mobile terminal.

The first controlling module 300 is configured to: control the vehicle to perform a lighting action, a pre-start action, and/or a pre-start reminding action, in the case that the control range in which the distance falls is in the welcome control range; and control the vehicle to be unlocked and at the same time open a door of the vehicle based on the actual distance, in the case that the control range in which the distance falls is switched to the unlock control range from the welcome control range. Alternatively, in the case that the distance is in the welcome control range, the vehicle is controlled to perform at least one of: a lighting action, a pre-start action, or a pre-start reminding action; and in the case that the distance is in the unlock control range, the vehicle is controlled to be unlocked, and the vehicle is controlled to open a door based on the distance.

In some embodiments of the present disclosure, the first controlling module 300 includes: a perceiving unit, a determining unit, and a controlling unit. The perceiving unit is configured to: acquire perception data of a user, in the case that the control range is in an anti-collision control range. The determining unit is configured to: determine an actual posture of the user based on the perception data. The controlling unit is configured to: match an optimal open action for the door of the vehicle based on the actual posture, and open the door of the vehicle according to the optimal open action. Alternatively, the first controlling module 300 includes: an acquiring unit, configured to: acquire posture information of a target user in the case that the distance is in an anti-collision control range, the target user being at least one of: a user carrying the mobile terminal or a user at a target orientation of the door of the vehicle; and a controlling unit, configured to: determine an open action of the door of the vehicle based on the posture information and control the vehicle to open the door according to the open action.

In some embodiments of the present disclosure, the apparatus for controlling a vehicle 10 further includes: a judging module and a second controlling module. The judging module is configured to: determine whether the vehicle meets a predetermined lock condition. The second controlling module is configured to: determine whether the control range in which the actual distance falls is a lock control range, in the case that the vehicle meets the predetermined lock condition; and lock the vehicle and control the vehicle to perform a lock-result reminding action, in the case that the control range in which the actual distance falls is the lock control range. Alternatively, the second controlling module is configured to: control the vehicle to be locked and control the vehicle to perform the lock-result reminding action, in the case that the vehicle meets the predetermined lock condition and the distance is in the lock control range.

In some embodiments of the present disclosure, the second controlling module includes: a first reminding unit and a second reminding unit.

The first reminding unit is configured to: control at least one device of the vehicle to perform the success-locking reminding action and control the vehicle to send a success-locking message to the mobile terminal, in the case that the vehicle is successfully locked, the at least one device including at least one of an optical display device and an acoustic reminding device.

The second reminding unit is configured to: control at least one device of the vehicle to perform an unsuccess-locking reminding action and control the vehicle to send an unsuccess-locking reminding message to the mobile terminal, in the case that the vehicle is unsuccessfully locked.

In some embodiments of the present disclosure, the apparatus for controlling the vehicle 10 further includes: a recording module, an acquiring module, and a reminding module. The recording module is configured to: record a stay duration for which the current positioning signal is outside the lock control range. The acquiring module is configured to: acquire in-vehicle image data of the vehicle and then determine whether there is a remaining passenger in the vehicle based on the in-vehicle image data, in the case that the stay duration exceeds a predetermined duration. The reminding module is configured to: lock the vehicle and at the same time send an abnormal reminder to a predetermined terminal, in the case that no passenger remains in the vehicle. Alternatively, the apparatus for controlling a vehicle is further configured to: determine a time of duration of received positioning signals, in the case that the vehicle meets a lock condition; acquire an in-vehicle image of the vehicle, in the case that the time of duration exceeds a predetermined duration; and control the vehicle to be locked and send an abnormal reminder to a target terminal, in the case that the in-vehicle image shows that no passengers remain in the vehicle, wherein the target terminal is a terminal other than the mobile terminal.

It is to be noted that the above functional module division manner in the apparatus for controlling the vehicle provided in the above embodiments is only illustrative for achieving the control of the vehicle. In actual application, the above-described functions are possible to be assigned and completed by different functional modules according to the need, i.e., the internal structure of the apparatus is divided into different functional modules to complete all or part of the above-described functions. In addition, the apparatus for controlling the vehicle provided in the above embodiments has the same concept as the embodiment of the method for controlling the vehicle, and the specific implementation process thereof is detailed in the embodiments of the method, which are not repeated herein.

According to the apparatus for controlling the vehicle provided by the embodiments of the present disclosure, stable transmission of signals and high-precision positioning are achieved by using a plurality of UWB receivers to receive positioning signals from a mobile terminal, and then a distance between the mobile terminal and the vehicle is determined based on the received positioning signals. In the case that the distance is in a welcome control range, the vehicle is controlled to perform a lighting action, a pre-start action, and/or a pre-start reminding action, thereby achieving the welcome of the vehicle and the pre-start of the vehicle, helping the user to find the vehicle, and at the same time saving the start-up time. In the case that the distance is in an unlock control range, the vehicle is unlocked and a door of the vehicle is opened based on the distance, therefore, the user can smoothly enter the vehicle with high convenience and efficiency and at a high level of intelligence and automation, which facilitates achieving a better use experience of the user.

FIG. 4 is a schematic structural diagram of a vehicle according to embodiments of the present disclosure. In some embodiments, the vehicle includes:
a memory 401, a processor 402, and a computer program stored on the memory 401 and runnable by the processor 402.

The processor 402, when running the program, is caused to perform the method for controlling the vehicle according to the above embodiments.

Further, the vehicle includes:
a communication interface 403, configured to achieve communication between the memory 401 and the processor 402.

The memory 401 is configured to store a computer program runnable by the processor 402.

The memory 401 includes a high-speed RAM memory or a non-transitory memory (nonvolatile memory), such as at least one disk memory.

In some embodiments, in the case that the memory 401, the processor 402, and the communication interface 403 are implemented independently, the communication interface 403, the memory 401, and the processor 402 are connected to each other and achieve communication with each other via a bus. In some embodiments, the bus is an industry-standard architecture (ISA) bus, a peripheral component interconnect (PCI) bus, an extended industry standard architecture (EISA) bus, or the like. In some embodiments, the buses are categorized as address buses, data buses, control buses, etc. For ease of representation, only one thick line is shown in FIG. 4, but it does not mean that there is only one bus or one type of bus.

In some embodiments, in terms of specific implementation, in the case that the memory 401, the processor 402, and the communication interface 403 are integrated and implemented on a single chip, the memory 401, the processor 402, and the communication interface 403 achieve communication with each other via an internal interface.

In some embodiments, the processor 402 is a central processing unit (CPU), an application-specific integrated circuit (ASIC), or one or more integrated circuits configured to implement the embodiments of the present disclosure.

The embodiments further provide a computer-readable storage medium storing a computer program thereon, wherein the program, when run by a processor, causes the processor to perform the method for controlling the vehicle as described above.

In the description of the present specification, reference term "an embodiment," "some embodiments," "example," "specific examples," or "some examples" means that the specific features, structures, materials, or characteristics described in conjunction with the embodiment or example are included in at least one embodiment or example of the present disclosure. In this description, schematic expressions of the above terms do not necessarily refer to the same embodiment or example. Moreover, the specific features, structures, materials, or characteristics described can be combined in a suitable manner in any one or N embodiments or examples. Furthermore, without contradicting each other, those skilled in the art can integrate and combine different embodiments or examples and features of different embodiments or examples described in this description.

Furthermore, the terms "first" and "second" are used only for descriptive purposes and can not be understood as indicating or implying relative importance or implicitly specifying the number of technical features indicated. Thus, a feature defined with the terms "first" or "second" expressly or impliedly indicates at least one such feature. In the description of the present disclosure, "N" means at least two, e.g., two, three, etc., unless otherwise expressly and specifically limited.

Any process or method description in a flowchart or otherwise described herein is understood to represent a module, fragment, or portion of the code including one or N executable instructions for performing the processes of a customized logic function or process, and the scope of the preferred embodiments of the present disclosure encompasses additional implementations, which can be implemented in any order other than that shown or discussed, including achieving the involved functions in a substantially simultaneous manner or reverse order, as should be understood by the person skilled in the art to which the embodiments of the present disclosure belong.

The logic and/or processes represented in the flowcharts or otherwise described herein, in some embodiments, is considered to be a sequence list of executable instructions used to implement the logic functions, and the sequence list is specifically implemented in any computer-readable medium for use by an instruction execution system, apparatus, or device (e.g., a computer-based system, a system including a processor, or other system that can load and execute instructions from the instruction execution system, apparatus, or device), or in combination with such instruction execution systems, apparatus, or device. In this description, the "computer-readable medium" can be any device that includes, stores, communicates, transmits, or transports a program for use by or in conjunction with an instruction-execution system, apparatus, or device. More specific examples of computer-readable media (a non-exhaustive list) include the following: an electrical connect portion with one or N wiring (electronic device), a portable computer disk cartridge (magnetic device), random access memory (RAM), read-only memory (ROM), erasable programmable read-only memory (EPROM or flash memory), fiber optic devices, and portable compact disc read-only memory (CDROM.) In addition, the computer-readable medium can even be a paper or other suitable medium on which the program can be printed, because the program can be acquired electronically by optically scanning the paper or other medium followed by editing, decoding, or, if necessary, processing it in other suitable ways, and then storing it in a computer memory.

It should be understood that the various parts of the present disclosure can be implemented in hardware, software, firmware, or combinations thereof. In the above embodiments, the N processes or methods are implemented with software or firmware stored in memory and executed by a suitable instruction execution system. In some embodiments, in the case that the processes are implemented in hardware as in other embodiments, the hardware is implemented using the following that are known in the art or a combination thereof: discrete logic circuits having logic gates for implementing logic functions on data signals, special purpose integrated circuits having suitable combination logic gates, programmable gate arrays (PGAs), field programmable gate arrays (FPGAs), and the like.

A person of ordinary skill in the art can understand that all or some of the processes in the method of the above embodiments are possible to be implemented by instructing the relevant hardware through a program, and the program can be stored in a computer-readable storage medium, wherein the program, when run by a device, cause the device to perform one or combination of the processes of the method embodiments.

Furthermore, the functional units in the various embodiments of the present disclosure can be integrated into a processing module, the individual units are physically present separately, or two or more units are integrated into a single module. The integrated modules are implemented either in the form of hardware or in the form of software functional modules. The integrated module is stored in a computer-readable storage medium in the case that it is implemented in the form of a software function module and sold or used as a separate product.

The storage medium mentioned above includes a read-only memory, a disk, or a CD-ROM. Although embodiments of the present disclosure have been shown and described above, it is to be understood that the above embodiments are exemplary and do not constitute a limitation on the present disclosure and that a person of ordinary skill in the art is capable of making changes, modifications, substitutions, and variations of the above embodiments within the scope of the present disclosure.

## Claims

1. A method for controlling a vehicle, wherein the vehicle is provided with a plurality of ultra wide band (UWB) receivers, and the method comprises:
determining a distance between a mobile terminal and the vehicle based on positioning signals received by the plurality of UWB receivers from the mobile terminal;
controlling the vehicle to perform at least one of: a lighting action, a pre-start action, or a pre-start reminding action, in a case that the distance is in a welcome control range; and
controlling the vehicle to be unlocked and controlling the vehicle to open a door based on the distance, in a case that the distance is in an unlock control range.

2. The method according to claim 1, wherein controlling the vehicle to open the door based on the distance comprises:
acquiring posture information of a target user, in a case that the distance is in an anti-collision control range, the target user being at least one of: a user carrying the mobile terminal or a user at a target orientation of the door; and
determining an open action of the door based on the posture information and controlling the vehicle to open the door according to the open action.

3. The method according to claim 1, further comprising:
controlling the vehicle to be locked and controlling the vehicle to perform a lock-result reminding action, in a case that the vehicle meets a lock condition and the distance is in a lock control range.

4. The method according to claim 3, wherein controlling the vehicle to perform the lock-result reminding action comprises:
controlling at least one device of the vehicle to perform a success-locking reminding action and controlling the vehicle to send a success-locking message to the mobile terminal, in a case that the vehicle is successfully locked, wherein the at least one device comprises at least one of an optical display device and an acoustic reminding device; and
controlling the at least one device of the vehicle to perform an unsuccess-locking reminding action and controlling the vehicle to send an unsuccess-locking reminding message to the mobile terminal, in a case that the vehicle is unsuccessfully locked.

5. The method according to claim 3, further comprising:
determining a time of duration of received positioning signals, in the case that the vehicle meets the lock condition;
acquiring an in-vehicle image of the vehicle, in a case that the time of duration exceeds a predetermined duration; and
controlling the vehicle to be locked and sending an abnormal reminder to a target terminal, in a case that the in-vehicle image shows that no passengers remain in the vehicle, wherein the target terminal is a terminal other than the mobile terminal.

6. An apparatus for controlling a vehicle, wherein the vehicle is provided with a plurality of ultra wide band (UWB) receivers, and the apparatus comprises:
a determining module, configured to: determine a distance between a mobile terminal and the vehicle based on positioning signals received by the plurality of UWB receivers from the mobile terminal; and
a first controlling module, configured to:
control the vehicle to perform at least one of: a lighting action, a pre-start action, or a pre-start reminding action, in a case that the distance is in a welcome control range; and
control the vehicle to be unlocked and control the vehicle to open a door based on the distance, in a case that the distance is in an unlock control range.

7. The apparatus according to claim 6, wherein the controlling module comprises:
an acquiring unit, configured to: acquire posture information of a target user, in a case that the distance is in an anti-collision control range, the target user being at least one of: a user carrying the mobile terminal or a user at a target orientation of the door; and
a controlling unit, configured to: determine an open action of the door based on the posture information and control the vehicle to open the door according to the open action.

8. The apparatus according to claim 6, further comprises:
a second controlling module, configured to: control the vehicle to be locked and control the vehicle to perform a lock-result reminding action, in a case that the vehicle meets a lock condition and the distance is in a lock control range.

9. A vehicle, comprising: a memory, a processor, and a computer program stored on the memory and runnable by the processor, wherein the processor, when running the computer program, is caused to perform the method for controlling the vehicle as defined in any one of claims 1 to 5.

10. A computer-readable storage medium, storing a computer program thereon, wherein the computer program, when loaded and run by a processor, causes the processor to perform the method for controlling a vehicle as defined in any one of claims 1 to 5.
